# EUROPEAN PATENT APPLICATION

(11) **EP 4 024 305 A1**
(43) Date of publication of application: **06.07.2022**
(21) Application number: 20877559.3
(22) Date of filing: 16.10.2020
(51) Int. Cl.: G06Q 10/10, G06Q 50/04

(54) **INFORMATION PROCESSING SYSTEM, INDUSTRIAL MACHINE, INFORMATION PROCESSING METHOD, AND INFORMATION PROCESSING PROGRAM**

(30) Priority: 16.10.2019 JP 2019189483
(71) Applicant: DMG Mori Co., Ltd., Yamatokoriyama-shi, Nara 639-1160 (JP)
(72) Inventor: GOMI, Eiichiro, Yamatokoriyama-shi, Nara 639-1160 (JP); OKAMOTO, Yoichi, Yamatokoriyama-shi, Nara 639-1160 (JP)
(74) Representative: TBK
(86) International application number: PCT/JP2020/039153
(87) International publication number: WO 2021/075562

(57) **Abstract**

The present invention provides an information processing system for deriving a skill level of an individual user with respect to an operation of an industrial machine. The information processing system includes an accumulator that accumulates, as individual ability information of an individual to operate an industrial machine, history information including at least one of knowledge of the industrial machine and use experience of the industrial machine of the individual, in associated with individual identification information for specifying the individual, and an analyzer that analyzes the individual ability information to derive a skill level of the individual with respect to an operation of the industrial machine.

## Description

This application is based upon and claims the benefit of priority from Japanese patent application No. 2019-189483, filed on October 16, 2019, the disclosure of which is incorporated herein in its entirety by reference.

### TECHNICAL FIELD

The present invention relates to an information processing system, an industrial machine, an information processing method, and an information processing program.

### BACKGROUND ART

In the above technical field, patent literature 1 discloses a machine tool that determines whether processing requested based on the permitted range of processing written in an IC card is possible and executes only permitted processing. Furthermore, non-patent literatures 1 and 2 disclose functions (modes 1, 2, and 3 and the like) of limiting the operation of a machine stepwise using keys and the like.

### CITATION LIST

### PATENT LITERATURE

Patent literature 1: Japanese Patent Laid-Open No. 4-184506

### NON-PATENT LITERATURE

Non-patent literature 1: ISO 23125:2015, "Machine tools - Safety - Turning machines", pages 25-29, January 15, 2015.

Non-patent literature 2: ISO 16090-1:2017, "Machine tools safety - Machining centres, Milling machines, Transfer machines - Part 1: Safety requirements", pages 23-30, December 08, 2017.

### SUMMARY OF THE INVENTION

### TECHNICAL PROBLEM

In the techniques described in the above literatures, however, it is impossible to derive the skill level of an individual user.

The present invention provides a technique of solving the above-described problem.

### SOLUTION TO PROBLEM

One example aspect of the present invention provides an information processing system comprising:
an accumulator that accumulates, as individual ability information of an individual to operate an industrial machine, history information including at least one of knowledge of the industrial machine and use experience of the industrial machine of the individual, in associated with individual identification information for specifying the individual; and
an analyzer that analyzes the individual ability information to derive a skill level of the individual with respect to an operation of the industrial machine.

Another example aspect of the present invention provides an industrial machine comprising:
a readout unit that reads out individual ability information of an individual to operate an industrial machine, from an accumulator that accumulates, as the individual ability information, history information including at least one of knowledge of the industrial machine and use experience of the industrial machine of the individual, in associated with individual identification information for specifying the individual; and
an analyzer that analyzes the readout individual ability information to derive a skill level of the individual with respect to an operation of the industrial machine.

Still other example aspect of the present invention provides an information processing method comprising:
reading out individual ability information of an individual to operate an industrial machine, from an accumulator that accumulates, as the individual ability information, history information including at least one of knowledge of the industrial machine and use experience of the industrial machine of the individual, in associated with individual identification information for specifying the individual; and
analyzing the readout individual ability information to derive a skill level of the individual with respect to an operation of the industrial machine.

Still other example aspect of the present invention provides an information processing program for causing a computer to execute a method, the method comprising:
reading out individual ability information of an individual to operate an industrial machine, from an accumulator that accumulates, as the individual ability information, history information including at least one of knowledge of the industrial machine and use experience of the industrial machine of the individual, in associated with individual identification information for specifying the individual; and
analyzing the readout individual ability information to derive a skill level of the individual with respect to an operation of the industrial machine.

### ADVANTAGEOUS EFFECTS OF INVENTION

According to the present invention, it is possible to derive the skill level of an individual user.

### BRIEF DESCRIPTION OF DRAWINGS

Fig. 1 is a block diagram showing the arrangement of an information processing system according to the first example embodiment of the present invention;
Fig. 2 is a view for explaining an overview of an information processing system according to the second example embodiment of the present invention;
Fig. 3A is a block diagram showing the functional arrangement of the information processing system according to the second example embodiment of the present invention;
Fig. 3B is a table for explaining an example of a table stored in a storage unit included in the information processing system according to the second example embodiment of the present invention;
Fig. 4 is a table showing, as a table, an example of individual ability information held by an information processing apparatus included in the information processing system according to the second example embodiment of the present invention;
Fig. 5 is a view for explaining the hardware arrangement of the information processing apparatus included in the information processing system according to the second example embodiment of the present invention;
Fig. 6 is a flowchart for explaining the processing procedure of the information processing apparatus included in the information processing system according to the second example embodiment of the present invention;
Fig. 7 is a view for explaining an overview of an information processing system according to the third example embodiment of the present invention;
Fig. 8 is a block diagram showing the arrangement of the information processing system according to the third example embodiment of the present invention;
Fig. 9A is a table showing, as a table, an example of individual ability information held by an information processing apparatus included in the information processing system according to the third example embodiment of the present invention;
Fig. 9B is a table showing an example of a determination table held by the information processing apparatus included in the information processing system according to the third example embodiment of the present invention;
Fig. 10 is a view for explaining the hardware arrangement of the information processing apparatus included in the information processing system according to the third example embodiment of the present invention;
Fig. 11 is a flowchart for explaining the processing procedure of the information processing apparatus included in the information processing system according to the third example embodiment of the present invention; and
Fig. 12 is a block diagram showing the arrangement of an industrial machine according to the fourth example embodiment of the present invention.

### DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

### [First Example Embodiment]

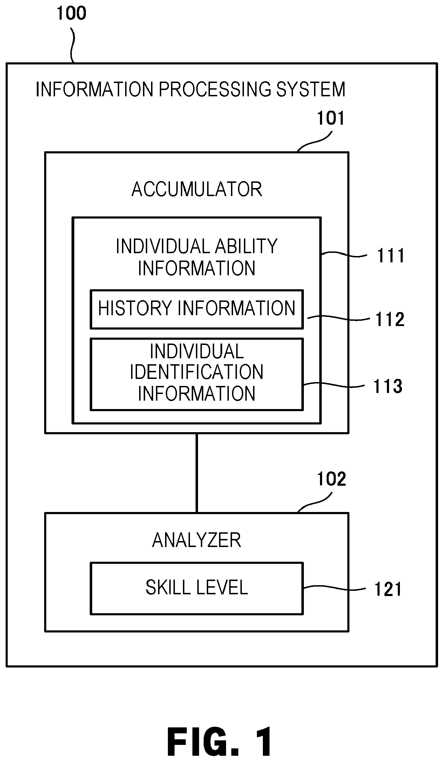

An information processing system 100 according to the first example embodiment of the present invention will be described with reference to Fig. 1. The information processing system 100 is a system that derives a skill level 121 of an individual with respect to an operation of an industrial machine.

As shown in Fig. 1, the information processing system 100 includes an accumulator 101 and an analyzer 102. The accumulator 101 accumulates, as individual ability information 111 of an individual to operate an industrial machine, history information 112 including at least one of knowledge of an industrial machine and use experience of the industrial machine of the individual, in associated with individual identification information 113 for specifying the individual. The analyzer 102 analyzes the individual ability information 111 to derive the skill level 121 of the individual with respect to the operation of the industrial machine.

According to this example embodiment, since the skill level with respect to an operation of an industrial machine is derived, each individual can use (or work using) an industrial machine suitable for his/her skill level.

### [Second Example Embodiment]

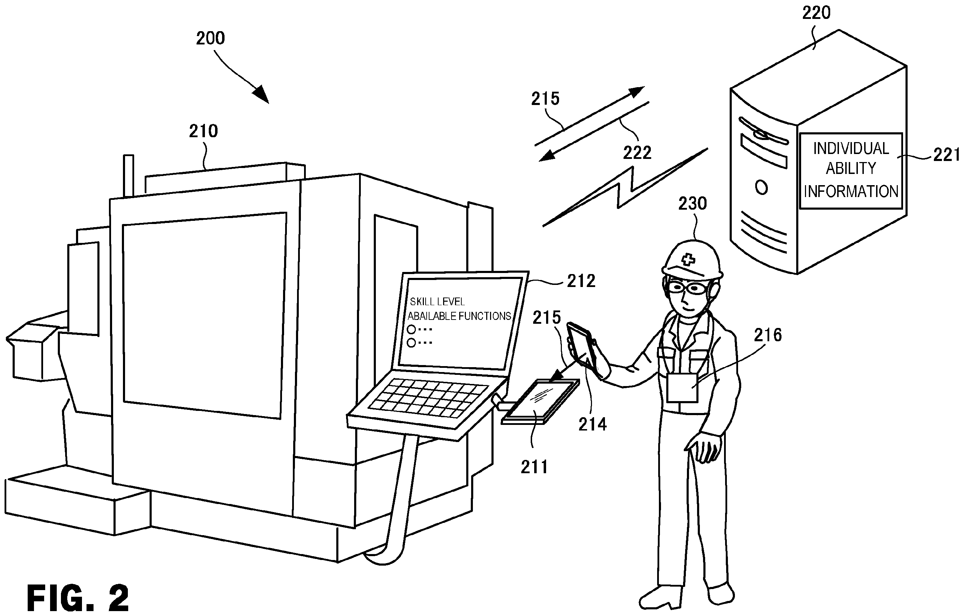

An information processing system according to the second example embodiment of the present invention will be described next with reference to Figs. 2 to 6. Fig. 2 is a view for explaining an overview of an information processing system 200. The information processing system 200 includes an industrial machine 210 and an information processing apparatus 220. A user 230 who attempts to perform a work using the industrial machine 210 uses a reading device 211 of the industrial machine 210 to read a barcode or an IC card (individual identification device) such as an employee ID card 216 or a license card for the industrial machine 210 in addition to an individual identification device 214 such as a smartphone. Note that the user 230 may input, to the industrial machine 210, a combination of a password and an identification number for identifying the user 230 or use a biometric authentication device (not shown) to read the fingerprint or iris of the user 230. The industrial machine 210 reads out individual identification information 215 for specifying the individual (user 230) from the individual identification device 214 brought closer by the user 230.

The industrial machine 210 transmits the readout individual identification information 215 and information of the industrial machine to the information processing apparatus 220.

The information processing apparatus 220 accumulates, as individual ability information 221, the individual identification information 215 for specifying the user (individual) 230 and history information including at least one of knowledge and use experience of the industrial machine in associated with each other. For example, if the user takes a course such as lectures about knowledge of the industrial machine 210, history information is accumulated by inputting information from a normal input device (not shown) to the information processing apparatus 220 every time the user takes a course. A readout unit (not shown) of the information processing apparatus 220 reads out the individual ability information 221. The information processing apparatus 220 analyzes the individual ability information 221 to derive the skill level of the user 230 with respect to the operation of the industrial machine 210. The information processing apparatus 220 transmits a derived skill level 222 to the industrial machine 210. The industrial machine 210 displays the received skill level 222 as license information on a presenter 212 such as a display. Note that the information displayed as license information includes a condition for using the industrial machine 210, information concerning use experience, and a history of taking a course such as lectures in addition to the skill level 222 of the user 230 with respect to the operation of the industrial machine 210. Furthermore, the skill level 222 may be the level of the user 230 derived for each industrial machine 210 or the level of the user 230 derived with respect to each function and each use method of one industrial machine 210.

The industrial machine 210 includes a machine tool such as a machining center, a lathe, and a laser processing machine, a robot, and a washing machine, but is not limited to them.

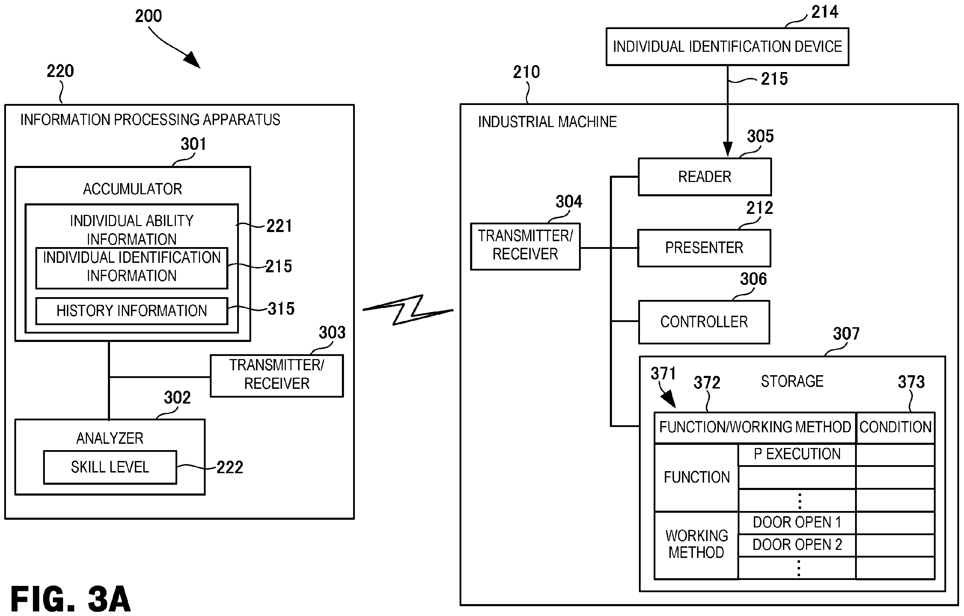

Fig. 3A is a block diagram showing the functional arrangement of the information processing system 200. The information processing apparatus 220 includes an accumulator 301, an analyzer 302, and a transmitter/receiver 303.

The accumulator 301 accumulates the individual ability information 221. The individual ability information 221 includes the individual identification information 215 for specifying the user 230 and history information 315 associated with the individual identification information 215. The history information 315 includes at least one of knowledge and use experience of the industrial machine by the individual. Note that "knowledge" indicates, for example, the history of taking practical training and a course of lectures of the industrial machine and history of viewing videos The "knowledge" represents, by numerical values, knowledge and wisdom about the structure, mechanism, use method, and the like of the industrial machine. The history information 315 may include the status of taking a course or training. On the other hand, "use experience" represents, by numerical values, the use time of the industrial machine by the user 230, contents of a work performed using the industrial machine, a function of the industrial machine which has been used before, and the like. Furthermore, the use experience of the industrial machine may include the type of the industrial machine, a processing work, and accident experience (interference between a spindle and a work or a work gripping portion, or the like) of the industrial machine. The use experience may also include at least one of pieces of the manufacturer information of the industrial machine, the type of the industrial machine, an installation place of the industrial machine, operation contents of the industrial machine, an operation time of the industrial machine, and an operation count of the industrial machine.

The analyzer 302 analyzes the individual ability information 221 accumulated in the accumulator 301 to derive the skill level 222 of the user 230 with respect to the operation of the industrial machine. More specifically, the analyzer 302 analyzes the history information 315 of the user 230 to derive the skill level 222 of the user 230 with respect to the operation of the industrial machine 210.

The skill level 222 is derived by combining the technique and knowledge of the user 230 with respect to the industrial machine 210. The skill level 222 represents, when viewed from multiple perspective with respect to handling of the industrial machine 210, a learning level related to understanding, an operation, maintenance, and how to deal with emergencies and the like, of the user 230 about the industrial machine 210.

The analyzer 302 scores the skill level 222 for each model of the industrial machine. That is, the analyzer 302 classifies each industrial machine 210 by the model, and evaluates the skill level 222 of the user 230 for each classified model. In this way, by classifying each evaluation result by the model of the industrial machine 210, it is possible to derive the skill level 222 of the user 230 more accurately. Furthermore, the analyzer 302 scores the evaluation result to obtain a numerical value. By obtaining the numerical value of the evaluation result, the user 230 can readily grasp his/her skill level 222. The analyzer 302 performs scoring by assigning a different weight in accordance with the use or working method of the industrial machine 210. That is, if, for example, the user 230 performs, using the industrial machine 210, a work which is complicated and requires high skill, the analyzer 302 evaluates the skill level 222 of the user 230 as a high level and gives a higher score, as compared with a case in which the user performs an easy operation.

To the contrary, if the user 230 performs only an easy and simple work using the industrial machine 210, for example, if the user 230 washes a coolant tank or replaces a work, the analyzer 302 does not give a high score with respect to evaluation of the skill level 222 of the user 230. In this way, the analyzer 302 derives the skill level 222 of the user 230 while changing the weight based on the difficulty and importance of work contents. If, for example, the user 230 performs a complicated work using the industrial machine 210, the skill level 222 of the user 230 is to be raised. Therefore, the analyzer 302 scores the skill level 222 of the user 230 by changing the weight in accordance with the work contents performed by the user 230, thereby performing evaluation of the skill level. Since the analyzer 302 evaluates the skill level 222 of the user 230 by changing the weight in this way, it is possible to evaluate the skill level 222 of the user 230 more accurately and finely with respect to the function of the industrial machine 210.

The accumulator 301 may store the skill level 222 derived by the analyzer 302 and the model and function of the industrial machine 210 available (executable or operatable) by the user (individual) 230 in association with each other. This allows the industrial machine 210 to provide the function of the industrial machine 210 to the user 230 in accordance with the skill level 222 of the user 230.

The transmitter/receiver 303 performs communication and data exchange with the industrial machine 210. The transmitter/receiver 303 receives the individual identification information 215 for identifying the user 230. Furthermore, the transmitter/receiver 303 transmits the analysis result of the analyzer 302 to the industrial machine 210. Note that data transmitted/received by the transmitter/receiver 303 is not limited to the data described here.

The industrial machine 210 includes the presenter 212, a transmitter/receiver 304, a reader 305, a controller 306, and a storage 307. The reader 305 reads individual information of the user 230. The reader 305 is, for example, a card reader or the like, and reads the individual identification information 215 for identifying the user (individual) 230 from a terminal such as a smartphone or an IC (integrated Circuit) card held by the user 230. Note that the user 230 may input, to the industrial machine 210, a combination of a password and an identification number for identifying the user 230 or use a biometric authentication device to read the fingerprint or iris of the user 230. Alternatively, a face authentication device may be used to read the face of the user 230. The read individual identification information 215 is transmitted to the information processing apparatus 220 via the transmitter/receiver 304.

The transmitter/receiver 304 controls communication and data exchange with the information processing apparatus 220. The transmitter/receiver 304 transmits the model and the read individual identification information 215 to the information processing apparatus 220. For example, the transmitter/receiver 304 receives, from the information processing apparatus 220, the skill level 222 of the user 230 derived in correspondence with the function and the working method. Note that data transmitted/received by the transmitter/receiver 304 is not limited to the data described here. Furthermore, the transmitter/receiver 304 transmits, to the information processing apparatus 220, the operation status of the industrial machine 210 such as work contents and a work time by the user 230. Upon receiving the operation status of the industrial machine 210 from the transmitter/receiver 304, the information processing apparatus 220 updates the individual ability information 221 (history information 315) of the user 230 accumulated in the accumulator 301. The skill level 222 of the user 230 is updated along with update of the individual ability information 221.

The presenter 212 presents, as license information, the skill level 222 of the user 230 derived by the analyzer 302 of the information processing apparatus 220. Note that the skill level 222 may or may not be displayed. That is, by seeing the license information presented on the presenter 212, the user 230 can grasp a work that he/she can perform using the industrial machine 210.

In addition, in this example embodiment, since the analyzer 302 analyzes the skill level 222 of the user with reference to a unified de facto standard, it is possible to obtain a more objective evaluation as license information. This allows the user 230 to use the license information as the certificate of his/her skill. The presenter 212 presents, as license information, the industrial machine 210 that the user can operate, like categories in a driver's license. The user 230 can use the license information as the certificate of his/her skill as long as the license information complies with the de facto standard. For example, when taking a work or changing jobs, the user 230 can use the license information to appeal that "it is possible to process a work like this processing".

The controller 306 controls the function of the industrial machine 210 in accordance with the skill level 222 of the user 230. The controller 306 controls the industrial machine 210 with reference to a table 371 stored in the storage 307.

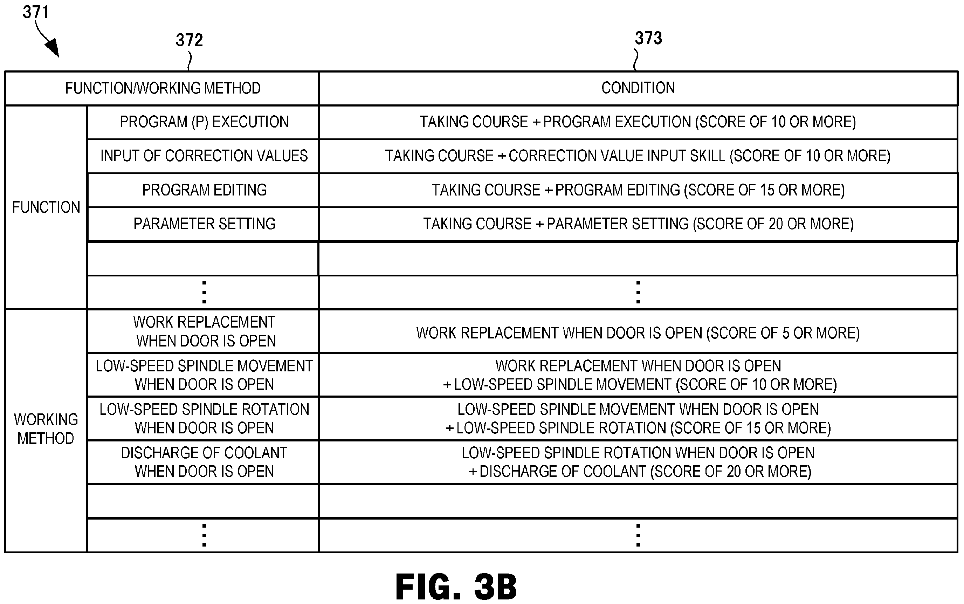

Fig. 3B is a table for explaining an example of the table 371 stored in the storage 307 of the information processing system 200 according to this example embodiment. The table 371 stores a condition 373 in association with a function/working method 372. The function includes, for example, work replacement, program execution (start and stop), input of correction values such as a tool length, program editing, and machine parameter setting. The working method includes, for example, work replacement in a state in which the door of the industrial machine 210 is open (a state in which the interlock does not work), and spindle movement at low speed (slow speed) in the state in which the door is open). Furthermore, the working method includes execution of spindle rotation at low speed in the state in which the door is open, and execution of part of a programmed operation. In addition, the working method includes discharge of a coolant and execution of spindle rotation at higher speed in the state in which the door is open.

The condition 373 is a requirement to be satisfied by the user 230 when the industrial machine 210 provides the function/working method. For example, if the function is program execution, the user 230 is required to take a course and have 10 or more as the score of the program execution. Similarly, if the function is input of correction values, the user 230 is required to take a course and have 10 or more as the score of the input of correction values. If the function is program editing, the user 230 is required to take a course and have 15 or more as the score of the program editing. If the function is parameter setting, the user 230 is required to take a course and have 20 or more as the score of the parameter setting.

On the other hand, if work replacement is performed in the state in which the door is open, the user 230 is required to have 5 or more as the score of the work replacement in the state in which the door is open. If the spindle is moved at low speed in the state in which the door is open, the user 230 is required to have experience of execution of work replacement in the state in which the door is open, and have 10 or more as the score of the spindle movement at low speed. If the spindle is rotated at low speed in the state in which the door is open, the user 230 is required to have experience of execution of spindle movement at low speed in the state in which the door is open, and have 15 or more as the score of the spindle rotation at low speed. If a coolant is discharged in the state in which the door is open, the user 230 is required to have experience of execution of spindle rotation at low speed in the state in which the door is open, and have 20 or more as the score of the discharge of the coolant. The controller 306 controls to limit execution of the function/working method 372 for the user who does not satisfy the condition 373. The table shown in Fig. 3B is merely an example, and another condition may be set for another function or use method.

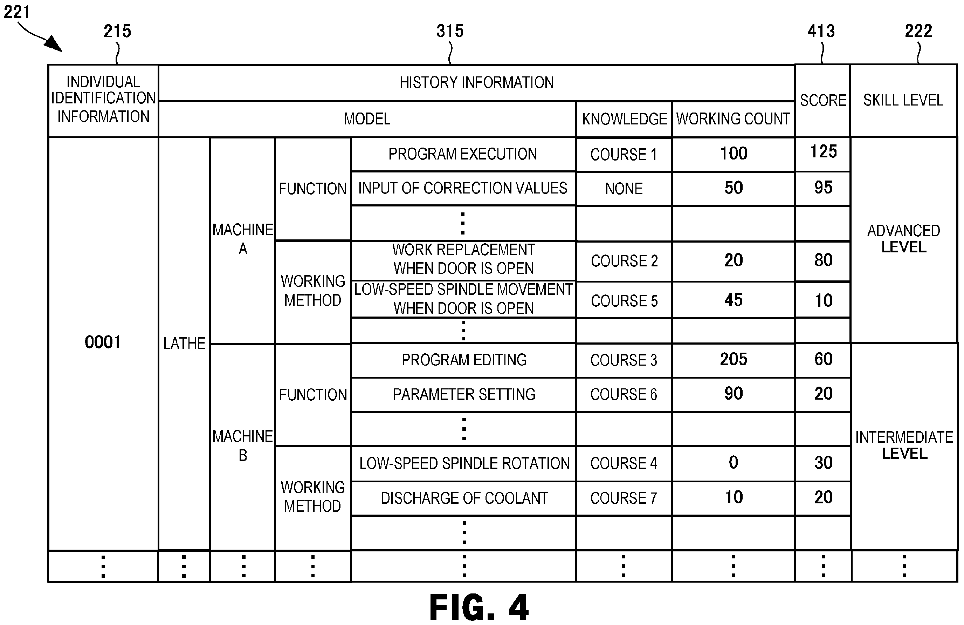

Fig. 4 is a table showing, as a table, an example of the individual ability information 221 held by the information processing apparatus 220. The individual ability information 221 stores the history information 315, a score 413, and the skill level 222 in association with the individual identification information 215.

The history information 315 includes the model of the industrial machine 210, the function of the industrial machine 210 executable by the user 230, the working method of the industrial machine 210, the knowledge of the industrial machine 210, and the working count of the industrial machine 210. The history information 315 is information indicating the knowledge and experience of the user 230 with respect to the industrial machine. A combination of the individual identification information 215 and the history information 315 corresponds to individual history information. Note that at least one of pieces of the manufacturer information of the industrial machine 210, the type of the industrial machine 210, an installation place of the industrial machine 210, operation contents of the industrial machine 210, an operation time of the industrial machine 210, and an operation count of the industrial machine 210 may be stored as the history information 315 (individual history information). In addition, the history of attendance of courses may be stored as the history information 315.

The score 413 scores the skill level 222 obtained by analyzing the individual history information of the user 230, thereby representing the skill level 222 by a numerical value. The skill level 222 is a level with respect to the skill of the user 230 classified based on the score. The skill level 222 represents the level in three levels of "advanced level", "intermediate level", and "beginner level", but finer level classification may be performed and the method of representing the level is not limited to this. Then, the information processing apparatus 220 derives the skill level 222 of the user 230 and decides control contents with reference to the individual ability information 221.

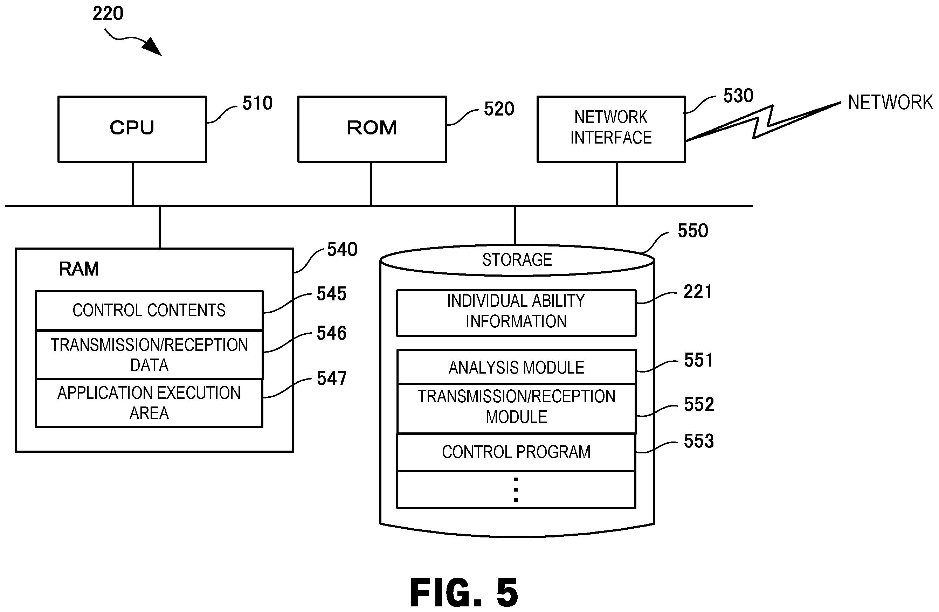

Fig. 5 is a view for explaining the hardware arrangement of the information processing apparatus 220. A CPU (Central Processing Unit) 510 is an arithmetic control processor, and implements the functional components of the information processing apparatus 220 shown in Fig. 3A by executing a program. The CPU 510 may include a plurality of processors to parallelly execute different programs, modules, tasks, or threads. A ROM (Read Only Memory) 520 stores permanent data such as initial data and a program, and other programs. A network interface 530 communicates with another apparatus or the like via a network. Note that the number of CPUs 510 is not limited to one, and a plurality of CPUs or a GPU (Graphics Processing Unit) for image processing may be included. The network interface 530 desirably includes a CPU independent of the CPU 510, and writes or reads transmission/reception data in or from the area of a RAM (Random Access Memory) 540. It is desirable to provide a DMAC (Direct Memory Access Controller) (not shown) for transferring data between the RAM 540 and a storage 550. Furthermore, the CPU 510 recognizes that data has been received by or transferred to the RAM 540, and processes the data. The CPU 510 prepares a processing result in the RAM 540, and delegates succeeding transmission or transfer to the network interface 530 or the DMAC.

The RAM 540 is a random access memory used as a temporary storage work area by the CPU 510. Control contents 545 are contents of controlling the function of the industrial machine 210 in accordance with the skill level 222 of the user 230.

Transmission/reception data 546 is data transmitted/received via the network interface 530. The RAM 540 includes an application execution area 547 for executing various application modules.

The storage 550 stores a database, various parameters, or the following data or programs necessary for implementation of this example embodiment. The storage 550 stores the individual ability information 221. The individual ability information 221 is the table, shown in Fig. 4, for managing the relationship among the individual identification information 215, the history information 315, and the like.

The storage 550 further stores an analysis module 551 and a transmission/reception module 552. The analysis module 551 is a module that analyzes the individual ability information 221 of the user 230, and sends the skill level 222 of the user 230 with respect to the industrial machine 210. The transmission/reception module 552 is a module that transmits/receives data to/from the industrial machine 210. These modules 551 and 552 are read out by the CPU 510 into the application execution area 547 of the RAM 540, and executed. A control program 553 is a program for controlling the whole information processing apparatus 220.

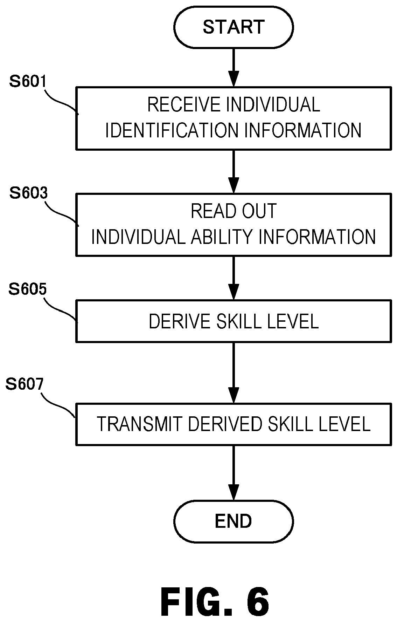

Fig. 6 is a flowchart for explaining the processing procedure of the information processing apparatus 220. The CPU 510 executes respective processes shown in the flowchart using the RAM 540, thereby implementing the functional components of the information processing apparatus 220 shown in Fig. 3A.

In step S601, the information processing apparatus 220 receives the individual identification information 215 for identifying the user 230 from the industrial machine 210. Next, in step S603, the information processing apparatus 220 reads out the individual ability information 221 from the accumulator 301 based on the received individual identification information 215. The individual ability information 221 is information that includes at least one of knowledge and independent use experience of the industrial machine 210 and is accumulated in the accumulator 301 in associated with the individual identification information 215. In step S605, the information processing apparatus 220 analyzes the readout individual ability information 221 to derive the skill level 222 of the individual 230 with respect to the operation of the industrial machine 210. Finally, in step S607, the information processing apparatus 220 transmits the derived skill level 222 to the industrial machine 210.

According to this example embodiment, since the skill level of the user with respect to the operation is presented, the user can readily grasp his/her skill level and usable functions. In addition, since the function of the industrial machine is controlled to be limited in accordance with the skill level of the user with respect to the operation, the user cannot perform a work that requires skills higher than his/her skill level, thereby implementing a safe work using the industrial machine. Furthermore, since the skill level of the user who is operating the industrial machine is known, it is possible to reduce occurrence of an accident, and reduce the downtime of the industrial machine caused by repair or maintenance. Furthermore, the user can prove his/her skill level.

### [Third Example Embodiment]

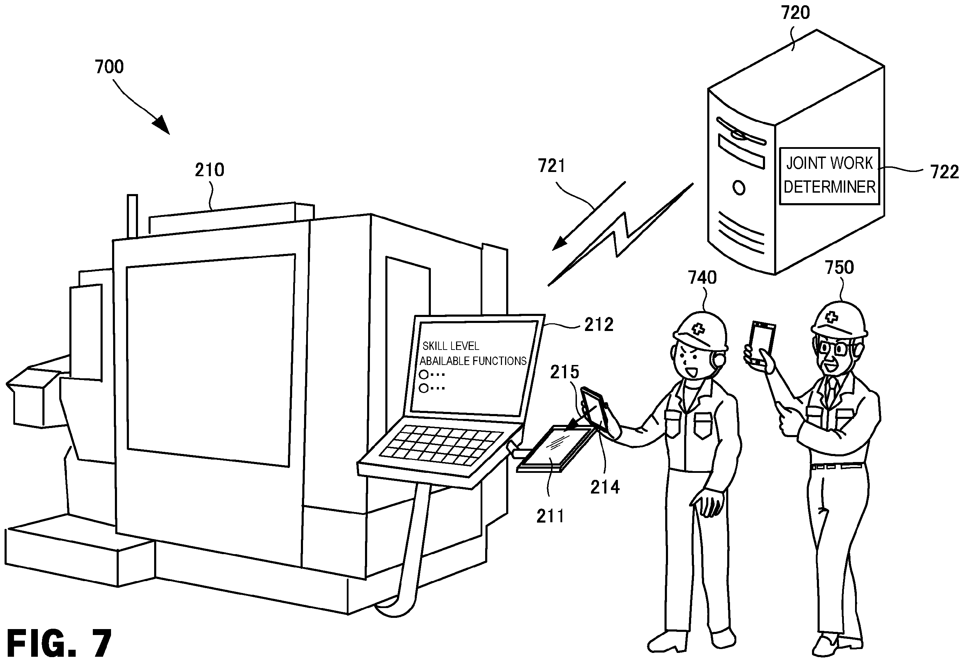

An information processing system 700 according to the third example embodiment of the present invention will be described next with reference to Figs. 7 to 11. Fig. 7 is a view for explaining an overview of the information processing system 700. The information processing system 700 is different from the above-described second example embodiment in that a joint work determiner 722 is provided. The remaining components and operations are similar to those in the second example embodiment. Hence, the same reference numerals denote similar components and operations, and a detailed description thereof will be omitted.

For example, consider a case in which a beginner user 740 and an experienced user 750 perform joint work using an industrial machine 210. In this case, the experienced user 750 corresponds to a trainer, and the beginner user 740 corresponds to a trainee. Assume that independent use of the industrial machine 210 cannot be permitted in consideration of a skill level 222 of the beginning user 740 because of many dangers. However, if the experienced user 750 stands by the beginner user 740 to provide guidance on handling of the industrial machine 210, the industrial machine 210 is controlled so that even the beginner user 740 can operate the industrial machine 210.

This is similar to a case in which in driving on public roads in a driving school, even a driver with a provisional license can drive on public roads when an instructor sits on the passenger seat. Even the beginner user 740 can quickly improve the skill level 222 by receiving appropriate guidance from the experienced user 750. Therefore, depending on a combination of a plurality of the beginning user 740 and the experienced 750 of the different skill levels 222, joint work of the industrial machine 210 according to the skill level 222 of the experienced user 750 is allowed. The beginning user 740 is a beginner with respect to the operation and handling of the industrial machine 210 but may have the certain skill level 222 with respect to another industrial machine. In this case, the beginning user 740 may receive guidance from the experienced user 750 skilled in the operation of the industrial machine 210 to learn the operation of the new industrial machine 210, and thus joint work of the industrial machine 210 is allowed.

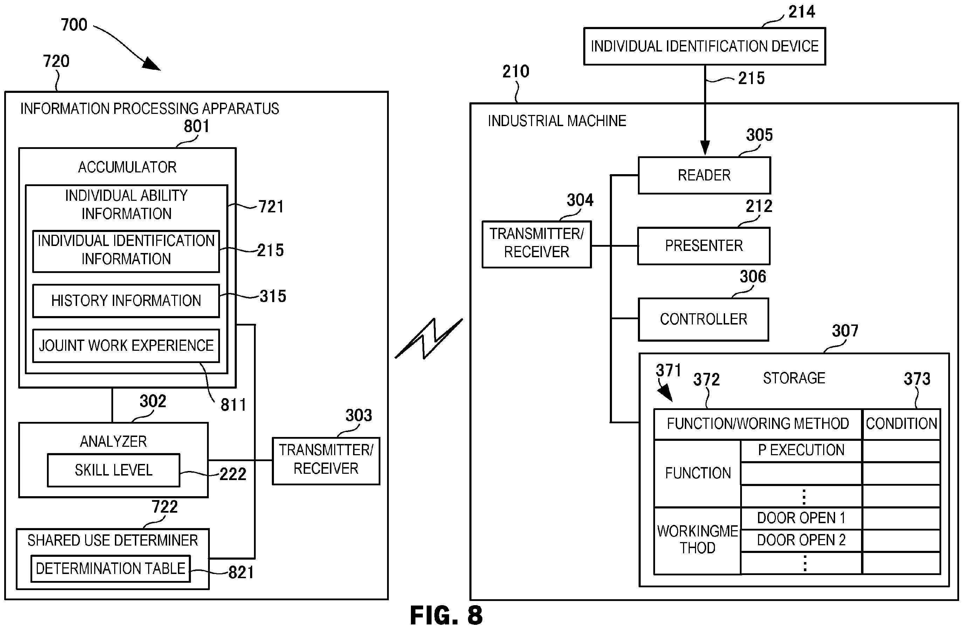

Fig. 8 is a block diagram showing the arrangement of the information processing system 700. The information processing system 700 includes the industrial machine 210 and an information processing apparatus 720. The information processing apparatus 720 includes an accumulator 801 and the joint work determiner 722. The accumulator 801 accumulates, as individual ability information 721, joint work experiences 811 of the industrial machine 210 by a plurality of users of different skill levels 222.

The joint work determiner 722 determines whether to perform joint work using the industrial machine 210 by the plurality of users of the different skill levels 222. First, an analyzer 302 reads out the individual ability information 721 concerning the joint work experiences 811 accumulated in the accumulator 801. Then, the analyzer 302 derives the skill level 222 of the beginning user 740 with respect to the operation of the industrial machine 210 based on the readout individual ability information 721 concerning joint work. Then, the joint work determiner 722 determines joint work based on the skill level 222 derived by the analyzer 302. The joint work determiner 722 determines whether to perform joint work using, for example, a determination table 821. For the beginning user 740, the joint work determiner 722 determines, for independent use, that the skill level 222 of the beginning user 740 is a skill level at which the user cannot use the industrial machine, and determines, for joint work with the experienced user 750, that the skill level 222 of the beginning user 740 is a skill level at which the user can use the industrial machine.

The controller 306 of the industrial machine 210 receives the derived skill levels 222 from the information processing apparatus 720, and provides, in the case of joint work of the industrial machine 210, a function according to the experienced user 750 of the higher skill level 222 based on the received skill levels 222. The controller 306 controls the industrial machine 210 with reference to a determination table 821 stored in the storage 307. Note that the controller 306 may consider an erroneous operation of the beginner user 740 by, before execution of a processing program, displaying a pop-up indicating cautions, which is not displayed at the time of independent use, or prompting the users 740 and 750 to press a button of "Are you sure you want to execute?" twice.

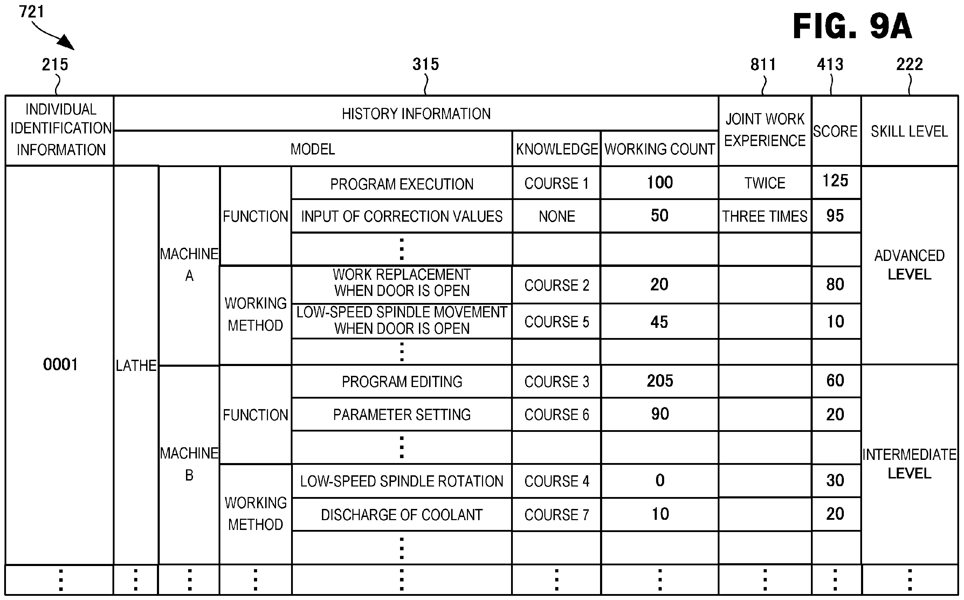

Fig. 9A is a table showing, as a table, an example of individual ability information 721 held by the information processing apparatus 720. The individual ability information 721 stores the joint work experience 811 in association with individual identification information 215. Note that a combination of the individual identification information 215 and history information 315 corresponds to the individual ability information. The joint work experience 811 indicates a use history for joint work by the plurality of users 740 and 750. As the joint work experience 811, a joint work count is accumulated, but the present invention is not limited to this. For example, a joint work time and a joint work partner may be accumulated. Then, the information processing apparatus 720 derives the skill levels 222 of the plurality of the users 740 and 750 with respect to the industrial machine 210 with reference to the individual ability information 721. Note that the skill level 222 may be derived in consideration of the joint work experience 811 in addition to the independent use experience (individual use experience). If a joint work partner is different, control may be performed to change the change amount of the skill level or change the skill level by the same change amount regardless of the joint work partner. Note that in this example embodiment, the joint work count is used to derive the skill level. The present invention, however, is not limited to this. A joint work time may be used to derive the skill level. Furthermore, in accordance with the joint work partner (his/her skill level), the formula of the skill level that increases according to joint work may be changed.

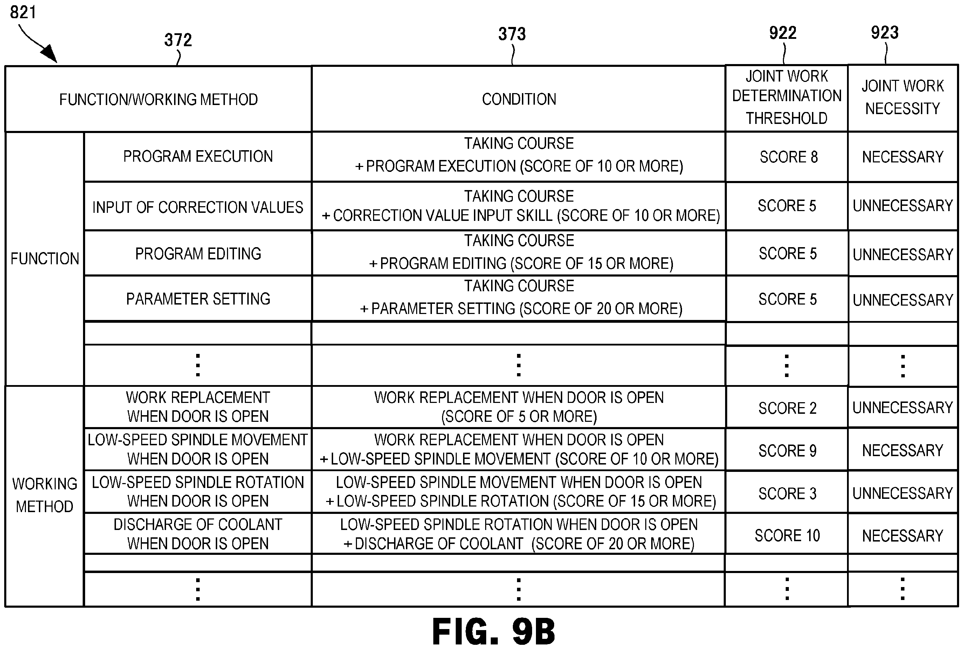

Fig. 9B is a table showing an example of the table held by the information processing apparatus 720. The determination table 821 stores a joint work determination threshold 922 and a joint work necessity 923 in association with a function/working method 372. The joint work determination threshold 922 is a threshold for determining whether joint work is necessary or not. The joint work necessity 923 indicates whether the user 740 needs joint work with respect to the model or function of the industrial machine 210. Then, with reference to, for example, the determination table 821, the information processing apparatus 720 determines whether joint work is necessary or not.

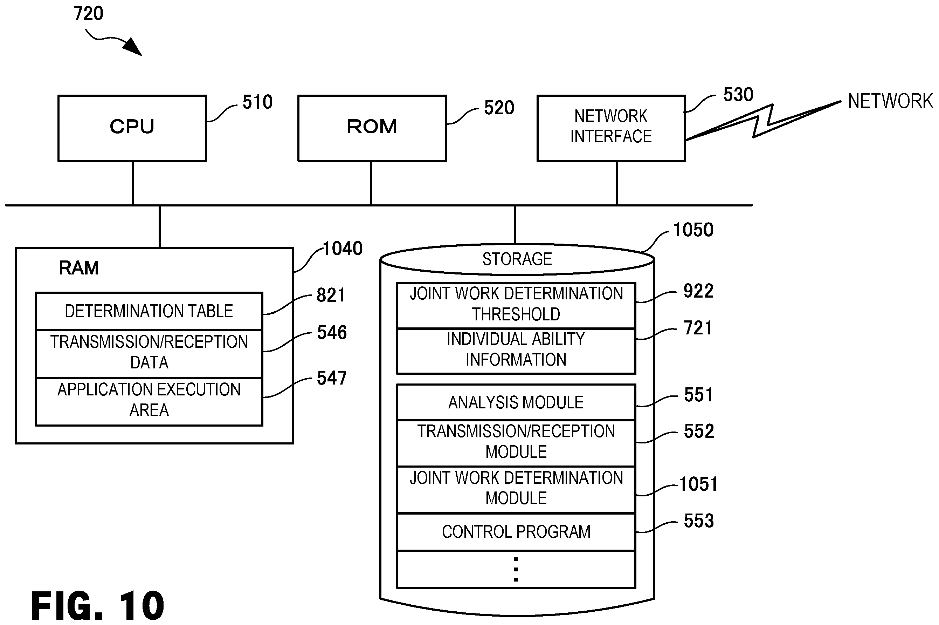

Fig. 10 is a view for explaining the hardware arrangement of the information processing apparatus 720. ARAM 1040 is a random access memory used as a temporary storage work area by a CPU 510. An area to store data necessary for implementation of this example embodiment is secured in the RAM 1040. The determination table 821 is a table for determining joint work by the users 740 and 750.

A storage 1050 stores a database, various parameters, or the following data or programs necessary for implementation of this example embodiment. The storage 1050 stores the joint work determination threshold 922 and the individual ability information 721. The individual ability information 721 is the table, shown in Fig. 9A, for managing the relationship among the individual identification information 215, the history information 315, and the like. The joint work determination threshold 922 is a threshold used to determine whether joint work is necessary or not.

The storage 1050 further stores a joint work determination module 1051. The joint work determination module 1051 is a module that determines joint work. This module 1051 is read out by the CPU 510 into an application execution area 547 of the RAM 1040, and executed.

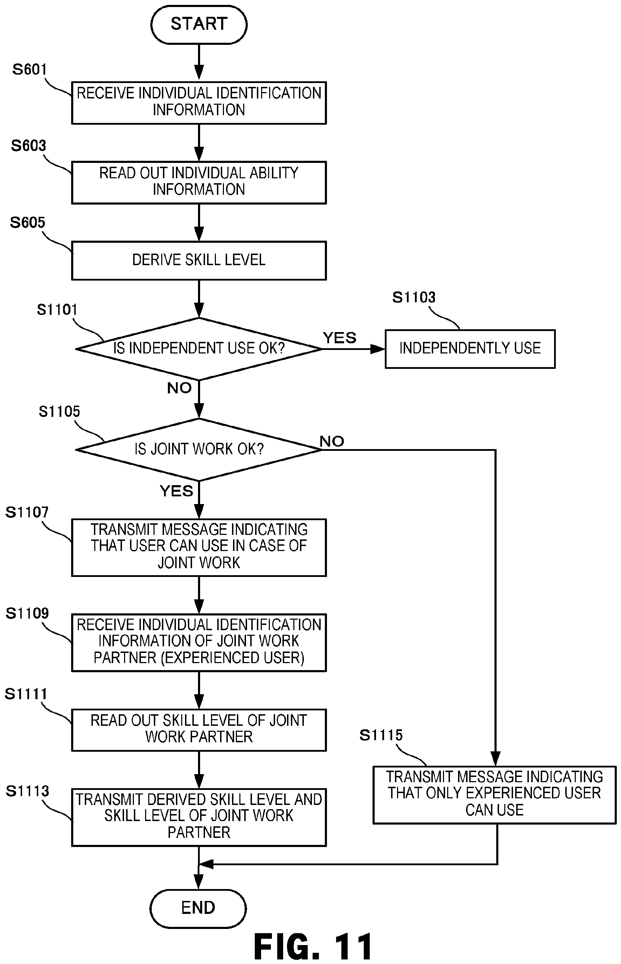

Fig. 11 is a flowchart for explaining the processing procedure of the information processing apparatus 720. In step S1101, based on the derived skill level, the information processing apparatus 720 determines whether the user 740 can independently use the industrial machine. If it is determined that the user can independently use the industrial machine (YES in step S1101), the information processing apparatus 720 advances to step S11103. In step S1103, the information processing apparatus 720 transmits, to the industrial machine 210, that the user can independently use the industrial machine. If it is determined that the user 740 cannot independently use the industrial machine (NO in step S1101), the information processing apparatus 720 advances to step S1105. In step S1105, the information processing apparatus 720 determines whether the user 740 can use the industrial machine 210 in the case of joint work. If it is determined that the user cannot use the industrial machine even in the case of joint work (NO in step S1105), the information processing apparatus 720 advances to step S1115. In step S1115, the information processing apparatus 720 transmits, to the industrial machine 210, a message indicating that only the experienced user 750 can use the industrial machine. If it is determined that the user can use the industrial machine in the case of joint work (YES in step S1105), the information processing apparatus 720 advances to step S1107. In step S1107, the information processing apparatus 720 transmits, to the industrial machine 210, a message indicating that the user can use the industrial machine in the case of joint work. In step S1109, the information processing apparatus 720 receives the individual identification information 215 of the joint work partner (experienced user 750). In step S1111, the information processing apparatus 720 reads out the skill level 222 of the joint work partner. In step S1113, the information processing apparatus 720 transmits the derived skill level 222 of the user 740 and the skill level 222 of the user 750 as the joint work partner to the industrial machine 210.

According to this example embodiment, in the case of joint work by a plurality of users, even a user of a low skill level with respect to an operation can learn the operation of the industrial machine by receiving guidance of a user of a high skill level, thereby surely improving the skill level more quickly. Since the user of the high skill level and the user of the low skill level perform joint work, even the user of the low skill level with respect to the operation can use the industrial machine safely.

### [Fourth Example Embodiment]

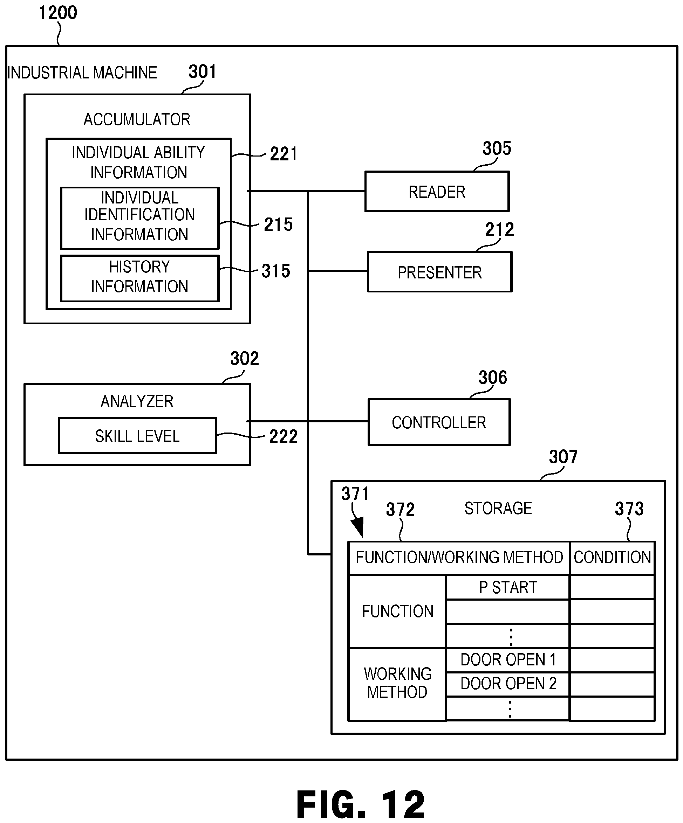

An information processing system according to the fourth example embodiment of the present invention will be described next with reference to Fig. 12. Fig. 12 is a block diagram for explaining the arrangement of an industrial machine 1200. The industrial machine 1200 is different from the above-described second and third example embodiments in that the industrial machine 1200 includes the arrangement of an information processing apparatus. The remaining components and operations are similar to those in the second and third example embodiments. Hence, the same reference numerals denote similar components and operations, and a detailed description thereof will be omitted.

The industrial machine 1200 includes an accumulator 301, a reader 305, an analyzer 302, a presenter 212, a controller 306, and a storage 307. The accumulator 301 accumulates, as individual ability information, in linkage with individual identification information 215 for specifying an individual, history information including at least one of knowledge and use experience of the industrial machine 1200. The analyzer 302 analyzes the individual ability information read out from the accumulator 301 to derive a skill level 222 of the user with respect to an operation of the industrial machine. A presenter 212 presents the derived skill level 222 to the user. The controller 306 controls the function of the industrial machine 1200 in accordance with the skill level 222 of a user 230. The controller 306 controls the industrial machine 1200 with reference to a table 371 stored in the storage 307.

According to this example embodiment, since the industrial machine derives the skill level of the user with respect to an operation, and presents a function according to the skill level of the user, communication with the information processing apparatus becomes unnecessary. Furthermore, even in an environment in which the industrial machine cannot communicate with the information processing apparatus, the industrial machine can provide the function according to the skill level of the user with respect to the operation.

### [Other Example Embodiments]

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims. A system or apparatus including any combination of the individual features included in the respective example embodiments may be incorporated in the scope of the present invention.

The present invention is applicable to a system including a plurality of devices or a single apparatus. The present invention is also applicable even when an information processing program for implementing the functions of example embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described example embodiments.

## Claims

1. An information processing system comprising:
an accumulator that accumulates, as individual ability information of an individual to operate an industrial machine, history information including at least one of knowledge of the industrial machine and use experience of the industrial machine of the individual, in associated with individual identification information for specifying the individual; and
an analyzer that analyzes the individual ability information to derive a skill level of the individual with respect to an operation of the industrial machine.

2. The information processing system according to claim 1 further comprising a presenter that presents, as license information for the operation of the industrial machine, the skill level derived by said analyzer.

3. The information processing system according to claim 1 or 2, wherein said analyzer scores the skill level of the individual for each model of the industrial machine.

4. The information processing system according to claim 3, wherein said analyzer performs scoring by assigning a different weight according to a working method using the industrial machine to a score of the use experience.

5. The information processing system according to any one of claims 1 to 4, wherein said accumulator further accumulates the skill level derived by said analyzer in associated with a model of the industrial machine and a function of the industrial machine usable by the individual.

6. The information processing system according to any one of claims 1 to 5, further comprising a controller that controls the function of the industrial machine in accordance with the skill level.

7. The information processing system according to claim 6, further comprising a storage that stores, in associated with each other, the function of the industrial machine and a condition of the skill level by which it is determined whether the individual can operate the function of the industrial machine,
wherein said controller controls to operate the function of the industrial machine with reference to said storage.

8. The information processing system according to claim 7, wherein the industrial machine is a machine tool, and said controller controls an interlock of the machine tool in accordance with the skill level.

9. The information processing system according to any one of claims 6 to 8, further comprising a joint work determiner that determines whether to perform joint work using the industrial machine by a plurality of individuals of different skill levels,
wherein said controller provides a function in accordance with an individual of a high skill level when performing the joint work using the industrial machine by the plurality of individuals of the different skill levels,
said accumulator accumulates a history of the joint work as the individual ability information, and
said analyzer further analyzes the history of the joint work as the individual ability information to derive the skill level of the individual with respect to the operation of the industrial machine.

10. The information processing system according to any one of claims 1 to 9, wherein said accumulator accumulates, as the individual ability information, at least one of pieces of a manufacturer information of the industrial machine, a type of the industrial machine, an installation place of the industrial machine, operation contents of the industrial machine, an operation time of the industrial machine, and an operation count of the industrial machine.

11. An industrial machine comprising:
a readout unit that reads out individual ability information of an individual to operate an industrial machine, from an accumulator that accumulates, as the individual ability information, history information including at least one of knowledge of the industrial machine and use experience of the industrial machine of the individual, in associated with individual identification information for specifying the individual; and
an analyzer that analyzes the readout individual ability information to derive a skill level of the individual with respect to an operation of the industrial machine.

12. An information processing method comprising:
reading out individual ability information of an individual to operate an industrial machine, from an accumulator that accumulates, as the individual ability information, history information including at least one of knowledge of the industrial machine and use experience of the industrial machine of the individual, in associated with individual identification information for specifying the individual; and
analyzing the readout individual ability information to derive a skill level of the individual with respect to an operation of the industrial machine.

13. An information processing program for causing a computer to execute a method, the method comprising:
reading out individual ability information of an individual to operate an industrial machine, from an accumulator that accumulates, as the individual ability information, history information including at least one of knowledge of the industrial machine and use experience of the industrial machine of the individual, in associated with individual identification information for specifying the individual; and
analyzing the readout individual ability information to derive a skill level of the individual with respect to an operation of the industrial machine.
